# EUROPÄISCHE PATENTSCHRIFT

(11) **EP 3 537 898 B1**
(45) Veröffentlichungstag und Bekanntmachung des Hinweises auf die Patenterteilung: **09.06.2021**
(21) Anmeldenummer: 17797540.6
(22) Anmeldetag: 24.10.2017
(51) Int. Cl.: A23P 20/20, B33Y 10/00, B33Y 30/00, B33Y 50/02

(54) **STEUEREINHEIT, NAHRUNGSMITTELDRUCKER UND VERFAHREN ZUR STEUERUNG EINES NAHRUNGSMITTELDRUCKERS**
CONTROL DEVICE, FOOD PRINTER AND METHOD FOR CONTROLLING A FOOD PRINTER
UNITÉ DE COMMANDE, IMPRIMANTE ALIMENTAIRE ET PROCÉDÉ POUR COMMANDER UNE IMPRIMANTE ALIMENTAIRE

(30) Priorität: 08.11.2016 DE 102016221860
(43) Veröffentlichungstag der Anmeldung: 18.09.2019
(73) Patentinhaber: BSH Hausgeräte GmbH, 81739 München (DE)
(72) Erfinder: SCHUSTER, Lucia, 70197 Stuttgart (DE); KÜHN, Robert, 01877 Bischofswerda (DE); ERBE, Sebastian, 75438 Knittlingen-Freudenstein (DE)
(86) Internationale Anmeldenummer: PCT/EP2017/077058
(87) Internationale Veröffentlichungsnummer: WO 2018/086856

(56) Entgegenhaltungen:
- WO-A1-2014/190168
- US-A- 4 670 271
- US-A1- 2009 074 928
- US-A1- 2013 089 642

## Beschreibung

Die Erfindung betrifft eine Steuereinheit, einen Nahrungsmitteldrucker mit einer solchen und ein Verfahren zur Steuerung eines solchen Nahrungsmitteldruckers, insbesondere für den Druck von mehreren, unterschiedlichen Druckmassen.

Nahrungsmitteldrucker ermöglichen es einem Nutzer, eine Vielzahl von unterschiedlichen Nahrungsmitteln individuell und zuverlässig zuzubereiten. Beispielsweise können durch einen Nahrungsmitteldrucker unterschiedliche Backwaren individualisiert und bei Bedarf hergestellt werden.

Für unterschiedliche Nahrungsmittel werden unterschiedliche Druckmassen benötigt, die von einem Nahrungsmitteldrucker gedruckt und ggf. gegart werden. Die unterschiedlichen Druckmassen können unterschiedliche rheologische Eigenschaften aufweisen, wobei die rheologischen Eigenschaften den Druckprozess beeinflussen können. Des Weiteren werden für den Druck eines (komplexen) Nahrungsmittels typischerweise mehrere unterschiedliche Druckmassen (mit unterschiedlichen rheologischen Eigenschaften) benötigt.

Aus der WO 2014/190168 A1 ist ein 3D-Nahrungsmitteldrucker mit Kapseln vorbekannt. Die US 2013/089642 A1 beschreibt ein Fertigungssystem für Nahrungsmittel. Die US 4 670 271 A beschäftigt sich mit einer Vorrichtung zum Drucken von Bildern auf Nahrungsmittel.

Das vorliegende Dokument befasst sich mit der technischen Aufgabe, eine Steuereinheit, einen Nahrungsmitteldrucker mit einer solchen und ein Verfahren zur Steuerung eines Nahrungsmitteldruckers bereitzustellen, die es ermöglichen, in zuverlässiger und präziser Weise Nahrungsmittel mit unterschiedlichen Druckmassen zu drucken.

Die Aufgabe wird jeweils durch die Gegenstände der unabhängigen Patentansprüche gelöst. Vorteilhafte bevorzugte Ausführungsformen sind insbesondere in den abhängigen Patentansprüchen definiert, in nachfolgender Beschreibung beschrieben oder in den Figuren der beigefügten Zeichnung dargestellt. Bevorzugten Ausführungsformen der Erfindung gemäß einer der Kategorien Steuereinheit, Nahrungsmitteldrucker und Verfahren entsprechen im Rahmen des technisch sinnvoll möglichen auch bevorzugte Ausführungsformen der Erfindung gemäß den jeweils anderen Kategorien, und dies auch dann, wenn darauf hierin nicht explizit hingewiesen ist.

Gemäß einem Aspekt der Erfindung wird demnach eine Steuereinheit für einen Nahrungsmitteldrucker beschrieben. Der Nahrungsmitteldrucker ist eingerichtet, Druckmasse aus einem Behälter auf eine Ablagefläche (z.B. auf eine Platte) zu extrudieren, um ein Nahrungsmittel zu drucken. Zu diesem Zweck kann der Nahrungsmitteldrucker einen Druckkopf umfassen, der mit Bewegungsmitteln (z.B. entlang einer oder mehrere Führungsschienen) an unterschiedlichen Positionen über der Ablagefläche positioniert werden kann. Der Behälter kann (ggf. austauschbar) in dem Druckkopf angeordnet werden, und es kann (essbare, viskose) Druckmasse an unterschiedlichen Positionen aus dem Behälter durch eine Düse extrudiert werden. So kann eine drei-dimensionale (3D) Anordnung von Druckmasse auf der Ablagefläche erzeugt werden. Die Anordnung von Druckmasse kann dann ggf. in einem Garraum gegart (z.B. gebacken) werden, um ein Nahrungsmittel herzustellen. Die Steuereinheit kann eingerichtet sein, den Druckprozess (d.h. insbesondere die Positionierung des Druckkopfes und/oder das Austreiben von Druckmasse aus dem Behälter) zu steuern (z.B. in Abhängigkeit von einem 3D Modell des zu erstellenden Nahrungsmittels).

Die Steuereinheit ist eingerichtet, Spektraldaten bezüglich der Druckmasse in dem Behälter zu ermitteln. Dabei hängen die Spektraldaten von einem Transmissionsgrad und/oder von einem Reflexionsgrad der Druckmasse für elektromagnetische Strahlung zumindest einer Wellenlänge ab. Insbesondere können die Spektraldaten den Transmissionsgrad und/oder den Reflexionsgrad der Druckmasse für die elektromagnetische Strahlung anzeigen.

Der Nahrungsmitteldrucker kann einen Spektralsensor, insbesondere ein Spektrometer, mit einem Sender und einem Empfänger umfassen. Dabei kann der Sender eingerichtet sein, elektromagnetische Strahlung (mit zumindest einer Wellenlänge) in Richtung des Behälters auszusenden, und der Empfänger kann eingerichtet sein, elektromagnetische Strahlung zu erfassen, die von bzw. in dem Behälter reflektiert wurde und/oder die den Behälter durchlaufen hat. Insbesondere kann durch den Empfänger der Anteil der ausgesendeten elektromagnetischen Strahlung empfangen bzw. erfasst werden, der in dem Behälter (insbesondere von Druckmasse in dem Behälter) reflektiert wurde und/oder der den Behälter durchlaufen hat. Die Steuereinheit kann dann eingerichtet sein, die Spektraldaten auf Basis einer Eigenschaft der ausgesendeten und der empfangenen elektromagnetischen Strahlung zu ermitteln. Die Eigenschaft kann z.B. die Energie der elektromagnetischen Strahlung für eine bestimmte Wellenlänge umfassen. Das Ermitteln der Spektraldaten kann dann das Ermitteln eines Quotienten aus der Energie der empfangenen Strahlung und der Energie der gesendeten Strahlung umfassen. So können z.B. der Transmissionsgrad und/oder der Reflexionsgrad ermittelt werden. Die Spektraldaten können für eine Vielzahl von unterschiedlichen Wellenlängen ermittelt werden.

Die Steuereinheit ist weiter eingerichtet, den Nahrungsmitteldrucker in Abhängigkeit von den Spektraldaten zu steuern. Insbesondere kann auf Basis der Spektraldaten eine Eigenschaft der Druckmasse in dem Behälter ermittelt werden (z.B. eine Fluss-Eigenschaft bzw. eine rheologische Eigenschaft der Druckmasse). Ein Druckparameter des Nahrungsmitteldruckers (z.B. der Druck, mit dem die Druckmasse aus dem Behälter getrieben wird) kann dann in Abhängigkeit von der ermittelten Eigenschaft der Druckmasse angepasst werden. Durch Berücksichtigung von Spektraldaten kann somit die Qualität eines Nahrungsmittel-Druckprozesses erhöht werden. Insbesondere kann der Druckprozess in effizienter und zuverlässiger Weise an unterschiedliche Druckmassen (mit unterschiedlichen rheologischen Eigenschaften) angepasst werden.

Der Behälter kann eine erste Druckmasse (mit einer ersten Viskosität) und eine zweite Druckmasse (mit einer zweiten Viskosität) umfassen. Die Steuereinheit kann eingerichtet sein, auf Basis der Spektraldaten einen Übergang zwischen der ersten Druckmasse und der zweiten Druckmasse zu detektieren. Die Steuereinheit kann dann eingerichtet sein, bei dem Übergang bzw. für den Übergang von der ersten Druckmasse zu der zweiten Druckmasse ein oder mehrere Druckparameter des Nahrungsmitteldruckers anzupassen. Insbesondere können ein oder mehrere Druckparameter angepasst werden, wenn anstelle der ersten Druckmasse die zweite Druckmasse aus dem Behälter extrudiert werden soll. Es können somit mehrere Druckmassen bzw. Komponenten eines Nahrungsmittels (sequentiell bzw. hintereinander) in einem Behälter bereitgestellt und zuverlässig verarbeitet werden. So kann in zuverlässiger und komfortabler Weise ein Mehrkomponenten-Druck für Nahrungsmittel ermöglicht werden.

Der Behälter kann ein Trennmittel zwischen der ersten Druckmasse und der zweiten Druckmasse umfassen, wobei das Trennmittel eine bestimmte spektrale Eigenschaft aufweist. Die spektrale Eigenschaft kann der Steuereinheit im Vorfeld bekannt sein. Das Trennmittel kann geschmacksneutral sein. Des Weiteren kann die Menge an Trennmittel zwischen den Druckmassen (volumenmäßig) um ein oder mehrere Größenordnungen kleiner sein als die Mengen der Druckmassen. Das Trennmittel kann somit substantiell irrelevant für das hergestellte Nahrungsmittel sein. Das Trennmittel kann insbesondere allein für die Signalisierung eines Übergangs zwischen zwei unterschiedlichen Druckmassen verwendet werden. Die Steuereinheit kann eingerichtet sein, auf Basis der Spektraldaten und auf Basis der bestimmten spektralen Eigenschaft des Trennmittels den Übergang zwischen der ersten Druckmasse und der zweiten Druckmasse zu detektieren. Durch die Verwendung eines Trennmittels kann der Mehrkomponenten-Druck eines Nahrungsmittels weiter verbessert werden.

Die Steuereinheit kann eingerichtet sein, ein oder mehrere Druckparameter des Nahrungsmitteldruckers in Abhängigkeit von den Spektraldaten anzupassen. Die ein oder mehreren Druckparameter können dabei umfassen: eine Geschwindigkeit und/oder einen Druck, mit der bzw. mit dem Druckmasse aus dem Behälter extrudiert wird; eine Position (insbesondere entlang von x- und/oder y-Koordinaten) der Ablagefläche, an der Druckmasse aus dem Behälter extrudiert wird; und/oder eine Höhe (insbesondere entlang einer z-Koordinate) über der Ablagefläche, aus der Druckmasse aus dem Behälter extrudiert wird.

Im Rahmen der Ermittlung der Spektraldaten bezüglich der Druckmasse können (ggf. vorbestimmte) spektrale Eigenschaften (insbesondere ein Transmissionsgrad) des Behälters berücksichtigt werden. So kann gewährleistet werden, dass die Spektraldaten (nur) von Eigenschaften der Druckmasse abhängen. Der Behälter ist bevorzugt derart ausgebildet, dass der Behälter für die von dem Spektralsensor verwendete elektromagnetische Strahlung (zumindest in einem für die Messung verwendeten örtlichen Bereich) einen Transmissionsgrad aufweist, der höher als ein Transmissions-Schwellenwert (z.B. von 80%, 90% oder mehr) ist.

Die Spektraldaten können von dem Transmissionsgrad und/oder von dem Reflexionsgrad der Druckmasse für elektromagnetische Strahlung in einem Wellenlängen-Bereich mit einer Vielzahl von unterschiedlichen Wellenlängen abhängen. Insbesondere können die Spektraldaten ein Transmissions- und/oder Reflexionsspektrum für die Druckmasse anzeigen. Die Steuereinheit kann dann eingerichtet sein, auf Basis der Spektraldaten einen Inhaltsstoff der Druckmasse zu ermitteln. Die Kenntnis bzgl. des Inhaltsstoffes kann dann bei der Steuerung des Nahrungsmitteldruckers berücksichtigt werden.

Der Behälter kann Identifikationsmittel (z.B. einen maschinenlesbaren Code und/oder einen RFID Tag) umfassen, wobei die Identifikationsmittel Identifikationsdaten in Bezug auf Druckmasse in dem Behälter anzeigen. Die Steuereinheit kann eingerichtet sein, den Nahrungsmitteldrucker (auch) in Abhängigkeit von den Identifikationsdaten zu steuern. Beispielsweise können die Identifikationsdaten Druckparameter anzeigen, die für unterschiedliche Druckmassen in einem Behälter zu verwenden sind. Des Weiteren kann auf Basis der Spektraldaten ein Übergang zwischen den unterschiedlichen Druckmassen detektiert werden. So können auf Basis der Spektraldaten und auf Basis der Identifikationsdaten zu jedem Zeitpunkt in präziser Weise die erforderlichen Druckparameter ermittelt werden. Es wird somit ein qualitativ hochwertiger Mehrkomponenten-Druck ermöglicht.

Die Steuereinheit kann eingerichtet sein, eine Eigenschaft der elektromagnetischen Strahlung, die zur Ermittlung der Spektraldaten verwendet wird, in Abhängigkeit von den Identifikationsdaten anzupassen. Beispielsweise können die Identifikationsdaten anzeigen, welche ein oder mehreren Wellenlängen zur Ermittlung der Spektraldaten verwendet werden sollten. Der Spektralsensor des Nahrungsmittelsensors kann dann entsprechend angepasst werden. So können die Qualität der erfassten Spektraldaten und damit die Qualität des gedruckten Nahrungsmittels erhöht werden.

Die Steuereinheit kann eingerichtet sein, auf Basis der Identifikationsdaten Soll-Spektraldaten zu ermitteln. Die Soll-Spektraldaten können dann mit den Spektraldaten verglichen werden und es kann in Abhängigkeit von dem Vergleich ein Hinweis (z.B. ein Hinweis auf eine Fehlfunktion des Spektralsensors) an einen Nutzer des Nahrungsmitteldruckers ausgegeben werden. Es kann somit ein zuverlässiger Nahrungsmitteldruck ermöglicht werden.

Der Nahrungsmitteldrucker kann ein Pyrometer umfassen, das eingerichtet ist, Temperaturdaten in Bezug auf eine Temperatur des Behälters und/oder der Druckmasse zu erfassen. Insbesondere ermöglicht die Verwendung eines Pyrometers das berührungslose Erfassen von Temperaturdaten. Dabei können die o.g. Identifikationsdaten Kenndaten (für die Druckmasse und/oder für den Behälter) anzeigen, die es ermöglichen, die mit einem Pyrometer erfasste Wärmestrahlung in eine Temperatur des Behälters und/oder der Druckmasse umzurechnen. Die Steuereinheit kann eingerichtet sein, den Nahrungsmitteldrucker (auch) in Abhängigkeit von den Temperaturdaten zu steuern. Insbesondere können ein oder mehrere Druckparameter in Abhängigkeit von den Temperaturdaten angepasst werden. Alternativ kann eine Temperierungseinheit des Nahrungsmitteldruckers angesteuert werden, um die Temperatur des Behälters und/oder der Druckmasse zu verändern (z.B. auf eine Soll-Drucktemperatur). So kann die Druckqualität weiter erhöht werden.

Gemäß einem weiteren Aspekt der Erfindung wird ein Nahrungsmitteldrucker zum Druck eines Nahrungsmittels auf einer Ablagefläche beschrieben. Der Nahrungsmitteldrucker umfasst einen Druckkopf mit einem Behälter zur Aufnahme von Druckmasse. Außerdem umfasst der Nahrungsmitteldrucker einen Sensor zur Erfassung von Spektraldaten bezüglich der Druckmasse in dem Behälter. Des Weiteren umfasst der Nahrungsmitteldrucker die in diesem Dokument beschriebene Steuereinheit.

Gemäß einem weiteren Aspekt der Erfindung wird ein Verfahren zur Steuerung eines Nahrungsmitteldruckers beschrieben. Der Nahrungsmitteldrucker ist eingerichtet, Druckmasse aus einem Behälter auf eine Ablagefläche zu extrudieren, um ein Nahrungsmittel zu drucken. Das Verfahren umfasst das Ermitteln von Spektraldaten bezüglich der Druckmasse in dem Behälter. Dabei hängen die Spektraldaten von einem Transmissionsgrad und/oder von einem Reflexionsgrad der Druckmasse für elektromagnetische Strahlung mit zumindest einer Wellenlänge ab. Das Verfahren umfasst weiter das Steuern des Nahrungsmitteldruckers in Abhängigkeit von den Spektraldaten.

Es ist zu beachten, dass jegliche Aspekte der in diesem Dokument beschriebenen Steuereinheit bzw. des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in den beigefügten Zeichnungen dargestellten bevorzugten Ausführungsbeispielen näher beschrieben. Dabei zeigen
- Figur 1: ein Blockdiagramm eines Systems zur Herstellung eines Nahrungsmittels;
- Figur 2: ein Blockdiagramm eines beispielhaften Druckkopfes;
- Figur 3: beispielhafte spektrale Eigenschaften eines Behälters; und
- Figur 4: ein Ablaufdiagramm eines beispielhaften Verfahrens zur Steuerung eines Nahrungsmitteldruckers.

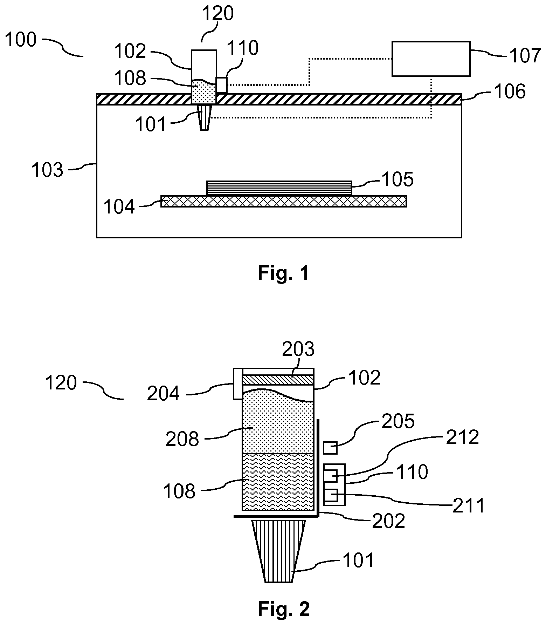

Wie eingangs dargelegt, befasst sich das vorliegende Dokument mit der zuverlässigen Verarbeitung von unterschiedlichen Druckmassen in einem Nahrungsmitteldrucker. In diesem Zusammenhang zeigt Fig. 1 ein Blockdiagramm eines beispielhaften Nahrungsmitteldruckers 100. Der Nahrungsmitteldrucker 100 umfasst einen Druckkopf 120, der mit Bewegungsmitteln 106 (z.B. entlang einer Schiene 106) an unterschiedlichen Stellen über einer Druckfläche bzw. Ablagefläche 104 positioniert werden kann. Der Druckkopf 120 kann durch eine Steuereinheit 107 des Druckers 100 angesteuert werden.

Die Steuereinheit 107 kann ein 3D Modell eines zu druckenden Nahrungsmittels 105 ermitteln. Des Weiteren kann die Steuereinheit 107 den Druckkopf 120 und die Bewegungsmittel 106 in Abhängigkeit von dem 3D Modell ansteuern, um ein Nahrungsmittel 105 auf der Ablagefläche 104 zu drucken, das eine dem 3D Modell entsprechende Form aufweist. Zu diesem Zweck können die Bewegungsmittel 106 eingerichtet sein, den Druckkopf 120 parallel über der Ablagefläche 104 zu bewegen (d.h. in X- und in Y-Richtung und/oder in einem anderen Koordinatensystem, wie z.B. einem polaren Koordinatensystem mit einer Radialrichtung und einer Winkelrichtung). Des Weiteren können die Bewegungsmittel 106 eingerichtet sein, den Abstand zwischen Druckkopf 120 und Ablagefläche 104 zu verändern (d.h. den Druckkopf 120 in Z-Richtung zu bewegen).

Die Ablagefläche 104 kann in einem Garraum 103 (z.B. in einem Ofen) angeordnet sein. Die Steuereinheit 107 kann eingerichtet sein, einen Garprozess des Nahrungsmittels 105 in dem Garraum 103 zu steuern. Insbesondere kann eine Temperatur des Garraums 103 gesteuert werden, z.B. um ein Nahrungsmittel 105 zu backen und/oder um ein Nahrungsmittel 105 zu kühlen.

Der Druckkopf 120 umfasst (wie in Fig. 2 dargestellt) einen Druckmasse-Behälter 102 zur Aufnahme von Druckmasse 108, 208. Der Druckmasse-Behälter 102 kann z.B. eine (austauschbare) Kartusche oder eine Kapsel umfassen. Der Behälter 102 kann ausgebildet sein, um mehrere unterschiedliche Druckmassen 108, 208 bzw. unterschiedliche Typen von Druckmassen aufzunehmen. Der in Fig. 2 dargestellte Behälter 102 umfasst eine erste Druckmasse 108 (z.B. einen Teig) und eine zweite Druckmasse 208 (z.B. eine Tomatensoße). Unterschiedliche Druckmassen 108, 208 können ggf. durch eine Trennschicht mit einem Trennmittel voneinander separiert werden. Insbesondere kann durch eine Trennschicht bewirkt werden, das sich direkt benachbarte Druckmassen 108, 208 in einem Behälter 102 nicht (substantiell) miteinander vermischen. Des Weiteren kann das Trennmittel Eigenschaften aufweisen, die es ermöglichen, den Übergang zwischen zwei unterschiedlichen Druckmassen 108, 208 in zuverlässiger Weise sensorisch zu erfassen.

Der Druckkopf 120 umfasst eine Düse 101 (z.B. eine Dosiernadel), über die Druckmasse 108, 208 aus dem Behälter 102 extrudiert und auf die Ablagefläche 104 gedruckt werden kann. Des Weiteren umfasst der Druckkopf 120 typischerweise Druckmittel 203 (z.B. einen beweglichen Stempel innerhalb des Behälters 102), mit denen Druckmasse 108, 208 über die Düse 101 aus dem Behälter 102 gepresst bzw. gedrückt werden kann. Die Druckmittel 203 können (in Abhängigkeit von dem 3D Modell) von der Steuereinheit 107 angesteuert werden, um ein Nahrungsmittel 105 zu drucken.

Die Parameter für die Ansteuerung der Druckmittel 203 hängen typischerweise von ein oder mehrere Eigenschaften, insbesondere von ein oder mehreren rheologischen Eigenschaften, der zu extrudierenden Druckmasse 108, 208 ab. Beispielsweise steigt mit sinkender Viskosität der Druckmasse 108, 208 typischerweise der Druck, der durch die Druckmittel 203 aufgebracht werden muss, um eine bestimmte Menge an Druckmasse 108, 208 aus der Düse 101 zu pressen. Zur Erzeugung eines qualitativ hochwertigen Nahrungsmittels 105 ist es somit vorteilhaft, wenn ein oder mehrere Eigenschaften der zu druckenden Druckmasse 105 bekannt sind, und bei dem Druckprozess (insbesondere bei der Festlegung der Druckparameter des Druckprozesses) berücksichtigt werden können.

Insbesondere bei industriell und/oder gewerblich abgefüllten Behältern 102, die z.B. durch einen Nutzer in einem Lebensmittelgeschäft gekauft werden können, können Identifikationsmittel 204 an dem Behälter 102 bereitgestellt werden, die Information in Bezug auf die ein oder mehreren Druckmassen 108, 208 anzeigen, die sich in dem Behälter 102 befinden. Die Identifikationsmittel 204 können z.B. einen maschinenlesbaren Code (z.B. einen Bar-Code oder einen QR-Code) und/oder einen RFID-Tag umfassen. Der Drucker 100 kann Sensormittel aufweisen (nicht dargestellt), die eingerichtet sind, Identifikationsdaten in Bezug auf die Identifikationsmittel 204 eines Behälters 102 zu erfassen. Die Steuereinheit 107 kann basierend auf den erfassten Identifikationsdaten ein oder mehrere Eigenschaften der ein oder mehreren Druckmassen 108, 208 in dem Behälter 102 ermitteln. Insbesondere kann die Steuereinheit 107 den Druckkopf 120 (insbesondere die Druckmittel 203) basierend auf den erfassten Identifikationsdaten ansteuern.

Die rheologischen Eigenschaften einer Druckmasse 108, 208 sind typischerweise auch von der Temperatur der Druckmasse 108, 208 abhängig. Der Druckkopf 120 kann einen Temperatursensor 205 (insbesondere ein Pyrometer) aufweisen, mit dem Temperaturdaten bezüglich der Temperatur der ein oder mehrere Druckmassen 108, 208 in einem Behälter 102 erfasst werden können. Der Temperatursensor 205 kann eingerichtet sein, die Temperaturdaten berührungslos zu erfassen. Der Temperatursensor 205 kann an einer Tragstruktur 202 des Druckkopfes 120 angeordnet sein. Die Tragstruktur 202 kann eingerichtet sein, in austauschbarer Weise unterschiedliche Behälter 102 (ggf. mit jeweils integrierter Düse 101) aufzunehmen. Die Steuereinheit 107 kann eingerichtet sein, den Druckkopf 120 (insbesondere die Druckmittel 203) basierend auf den erfassten Temperaturdaten ansteuern.

Wenn ein Behälter 102 keine Identifikationsmittel 204 aufweist (z.B. weil der Behälter 102 durch einen Nutzer selbst mit Druckmasse 108, 208 befüllt wurde) und/oder wenn ein Behälter 102 mehrere unterschiedliche Druckmassen 108, 208 mit unterschiedlichen rheologischen Eigenschaften aufweist, so können die Druckparameter zur Ansteuerung eines Druckkopfes 120 ggf. nicht mit ausreichender Genauigkeit bestimmt werden, was sich negativ auf die Qualität der gedruckten Nahrungsmittel 105 auswirken kann. Beispielsweise kann durch die Identifikationsmittel 204 eines Behälters 102 zwar Information in Bezug auf die unterschiedlichen Druckmassen 108, 208 bereitgestellt werden. Andererseits können die Identifikationsmittel 204 ggf. nicht mit ausreichender Genauigkeit die Grenze zwischen zwei unterschiedlichen Druckmassen 108, 208 anzeigen.

Der Druckkopf 120 kann einen Spektralsensor 110 (z.B. ein Spektrometer) umfassen, der eingerichtet ist, Spektraldaten bezüglich zumindest einer Druckmasse 108, 208 in einem Behälter 102 zu erfassen. Der Spektralsensor 110 kann an der Tragstruktur 202 des Druckkopfes 110, insbesondere unmittelbar an der Düse 101, angeordnet sein. Der Spektralsensor 110 umfasst einen Sender 211, der eingerichtet ist, elektromagnetische Strahlung in Richtung des Behälters 102 auszustrahlen. Der Sender 211 kann z.B. eine Lichtquelle, einen Laser, eine LED, etc. umfassen. Der Spektralsensor 110 umfasst weiter einen Empfänger 212, der eingerichtet ist, elektromagnetische Strahlung zu empfangen, die an und/oder in dem Behälter 102 reflektiert wird. Auf Basis der ausgesendeten Strahlung und der reflektierten Strahlung (d.h. auf Basis der Spektraldaten) können dann ein oder mehrere Eigenschaften der Druckmasse 108, 208 in dem Behälter 102 ermittelt werden.

Der Behälter 102 weist zumindest einen Bereich auf, in dem der Behälter 102 für die ausgesendete und für die reflektierte Strahlung zumindest teilweise transparent ist. Insbesondere kann der Behälter 102 zumindest in einem Bereich (z.B. innerhalb eines Fensters) einen Transmissionsgrad für die ausgesendete und für die reflektierte Strahlung aufweisen, der größer als ein Transmissions-Schwellenwert ist (z.B. von 80%, 90% oder mehr). So kann gewährleistet werden, dass die Spektraldaten Information in Bezug auf Druckmasse 108, 208 innerhalb des Behälters 102 anzeigen. Der Transmissionsgrad des Behälters 102 kann bei der Auswertung der erfassten Spektraldaten berücksichtigt werden. So kann in präziser Weise Information in Bezug auf Druckmasse 108, 208 innerhalb eines Behälters 102 ermittelt werden.

Die Steuereinheit 107 kann eingerichtet sein, den Druckkopf 120 und/oder die Bewegungsmittel 106 auch in Abhängigkeit von den Spektraldaten anzusteuern. So kann in zuverlässiger und präziser Weise ein Nahrungsmittel 105 aus unterschiedlichen Druckmassen 108, 208 gedruckt werden.

Mit den in diesem Dokument beschriebenen Maßnahmen kann Information in Bezug auf den Inhalt eines Behälters 102 (speziell bei einer Mehrkomponentenfüllung) für einen 3D Lebensmitteldrucker 100 mittels ein oder mehrerer berührungsloser Messverfahren ermittelt werden. Dabei kann auch die Temperatur der verwendeten Behälter 102 berührungslos gemessen werden.

Beispielsweise können bei einer Mehrkomponentenfüllung eines Behälters 102 die Füllmengen einzelner Druckmassen bzw. Komponenten 108, 208 gewissen Toleranzen unterliegen, so dass der Komponentenübergang zwischen benachbarten Komponenten 108, 208 zwischen unterschiedlichen Behältern bzw. Kartuschen 102 variiert. Dies kann zu Fehlern im Druckbild (d.h. in dem erzeugten Nahrungsmittel 105) führen. Mit den in diesem Dokument beschriebenen Messverfahren kann ein Komponentenübergang in präziser Weise (insbesondere auf Basis der Spektraldaten) detektiert werden.

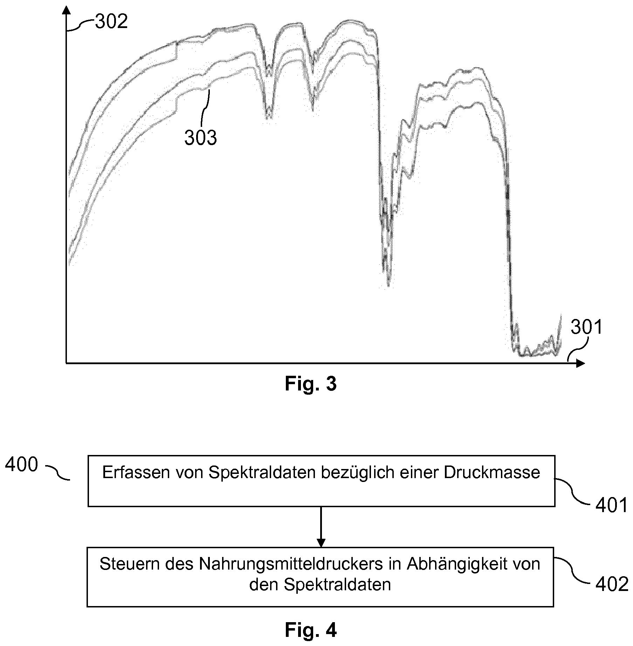

Der Druckkopf 120 kann, wie oben dargelegt, einen auf Spektroskopie basierten Sensor 110 umfassen, mit dem bestimmte Materialeigenschaften des Druckmediums 108, 208 (d.h. einer Druckmasse) ermittelt werden können. Dabei kann der Sensor 110 an Eigenschaften des verwendeten Behälters 102, insbesondere an das Material (z.B. Polypropylen) des Behälters 102, angepasst werden. Fig. 3 zeigt beispielhafte Transmissionsspektren 303 (die den Transmissionsgrad 302 als Funktion der Wellenlänge 301 anzeigen) für unterschiedliche Behälter 102. Der Sensor 110 kann eingerichtet sein, elektromagnetische Strahlung in einem Wellenlängen-Bereich auszusenden und zu empfangen, in dem der Behälter 102 einen relativ hohen Transmissionsgrad 302 aufweist. Des Weiteren kann die Steuereinheit 107 eingerichtet sein, das Transmissionsspektrum 303 eines Behälters 102 bei der Auswertung der durch den Sensor 110 erfassten Spektraldaten zu berücksichtigen. Der Behälter 102 kann zumindest einen Bereich (z.B. ein Sichtfenster) mit einem relativ hohen Transmissionsgrad 302 im Wellenlängen-Bereich des Sensors 110 aufweisen.

Beispielhafte Wellenlängen-Bereiche zur Ermittlung von Stoffeigenschaften eines Druckmediums 108, 208 sind UV (Ultraviolett), VIS (Strahlung im sichtbaren Bereich), NIR (Nahes Infrarot), MIR (Mittleres Infrarot), LIR (Fernes Infrarot). Es kann je nach Messanforderung und Informationsbedarf des Druckers 100 bezüglich des Druckmediums 108, 208 ein dafür geeigneter Wellenlängen-Bereich ausgewählt werden. Bevorzugt kann ein Wellenlängen-Bereich aus VIS bzw. NIR verwendet werden. Wenn z.B. ein Farbunterschied von unterschiedlichen Komponenten 108, 208 in einem Behälter 102 detektiert werden soll, dann kann ein Sensor 110 (insbesondere ein Empfänger 212) für den VIS-Bereich verwendet werden.

Der Sensor 110 umfasst einen Sender (z.B. eine Lichtquelle) 211, der auf den Detektor bzw. Empfänger 212 des Sensors 110 abgestimmt ist. Sender 211 und Empfänger 212 können in einer optischen Achse zueinander stehen und einen gemeinsamen Fokus aufweisen. Der Sensor 110 ist bevorzugt nah (d.h. unmittelbar) an dem Behälter 102 angeordnet, um Fehlmessungen (z.B. durch Störgrößen wie Fremdstrahlung) zu reduzieren. Des Weiteren ist der Sensor 110 bevorzugt in unmittelbarer Nähe des Austritts des Behälters 102 (d.h. an der Düse 101) angeordnet.

Der Sensor 110 kann eingerichtet sein, Spektraldaten (z.B. einen Reflexionsgrad) für eine oder mehrere Wellenlängen 301 oder für einen Wellenlängen-Bereich zu ermitteln. Insbesondere wenn keine Informationsmittel 204 an dem Behälter 102 angeordnet sind und/oder wenn wenig Information über das verwendete Druckmedium 108, 208 bekannt ist, kann ein vollständiges Spektrum (breitbandig z.B. im VIS, NIR und/oder IR Bereich) erfasst werden. Dabei steigt die verfügbare Information bezüglich des Druckmediums 108, 208 mit zunehmender Bandbreite und Auflösung des erfassten Spektrums an. Beispielsweise können ggf. einzelne Inhaltsstoffe eines Druckmediums 108, 208 ermittelt werden (insbesondere auf Basis eines Spektrums im IR Bereich).

Die auf einem industriell hergestellten und befüllten Behälter 102 versehene Codierung 204 zeigt typischerweise Informationen über den Inhalt des Behälters 102, optische Eigenschaften des Inhalts des Behälters 102, ein Material aus dem der Behälters 102 gefertigt ist, Druckparameter für den Druckprozess und/oder ein Mindesthaltbarkeitsdatum an. Wenn derartige Informationen verfügbar sind, so kann der Wellenlängen-Bereich des Sensors 110 auf eine oder nur wenige Wellenlängen (z.B. im VIS-Bereich) reduziert werden. Es kann somit ein kosteneffizienter Sensor 110 verwendet werden. Die Steuereinheit 107 kann auf Basis der durch die Informationsmittel 204 angezeigten Identifikationsdaten bestimmen, wie der Sensor 110 zu betreiben ist, um z.B. einen Komponentenübergang zwischen zwei Druckmassen 108, 208 in einem Behälter 102 zu erkennen.

Der Drucker 100 kann eine berührungslose Temperaturmessung des Behälters 102 ermöglichen. Insbesondere kann ein Pyrometer 205 (z.B. eine Thermosäule) bereitgestellt werden (z.B. als Teil des Sensors 110). Auf Basis der durch die Informationsmittel 204 angezeigten Information kann der für eine genaue Messung der Temperatur benötigte Emissionsgrad ermittelt werden (d.h. es können Kenndaten bzgl. des Behälters 102 und/oder bzgl. der ein oder mehreren Druckmassen 108, 208 bereitgestellt werden). Es kann somit eine präzise, berührungslose Messung der Temperatur ermöglicht werden. Die gemessene Temperatur des Behälters 102 kann zur Anpassung der Druckparameter verwendet werden. Des Weiteren können die Temperaturdaten dazu genutzt werden, um eine Temperierung des Behälters 102 auf eine bestimmte Soll-Drucktemperatur zu steuern bzw. zu regeln.

Die Steuereinheit 107 kann eingerichtet sein, auf Basis der Identifikationsdaten und auf Basis der Spektraldaten eine Verschmutzung des Sensors 110 und/oder des Behälters 102 zu detektieren. Insbesondere kann erkannt werden, dass die Spektraldaten nicht mit Soll-Spektraldaten übereinstimmen, die durch die Identifikationsmittel 204 auf dem Behälter 102 angezeigt werden. So können Anwendungs-/ Systemfehler reduziert bzw. vermieden werden.

Der Druckprozess kann anhand der Spektraldaten individuell auf die Eigenschaften des jeweiligen Druckmediums 108, 208 abgestimmt werden. Somit ist es möglich, die Druckparameter (z.B. Druckgeschwindigkeit, Materialvorschub, Druckgeometrie, Schichtabstand, etc.) in Abhängigkeit von dem Druckmedium 108, 208 und ggf. deren Temperatur anzupassen (z.B. zu regeln). So können saubere und wiederholbare Druckergebnisse erzielt werden.

Beispielsweise kann eine Pizza gedruckt werden, die aus zwei Komponenten 108, 208 besteht. Diese zwei Komponenten 108, 208 sind zum einen der Boden (Teig) und zum anderen der Belag (Tomatensoße). Beide Komponenten 108, 208 können sich gemeinsam in einer Kartusche 102 befinden. Beide Komponenten 108, 208 weisen unterschiedliche rheologische Eigenschaften auf, die wiederum temperaturabhängig sind. Um beide Komponenten 108, 208 aufeinander zu schichten (Tomatensoße über Teig) können von dem Drucker 100 zwei unterschiedliche Ebenen gedruckt werden.

Der Übergang zwischen den beiden Komponenten 108, 208 kann (insbesondere bei einer Kartusche 102, die durch einen Nutzer befüllt wurde) variieren. Anhand der Spektraldaten kann jedoch der Übergang zwischen den beiden Komponenten 108, 208 in zuverlässiger Weise detektiert werden. Die Steuereinheit 107 kann dann die Druckparameter und/oder die Druckgeometrie in Abhängigkeit von den Spektraldaten anpassen. Somit kann die Tomatensoße in zuverlässiger Weise auf dem Teig platziert werden.

Durch die Berücksichtigung von Informationsmitteln 204 eines Behälters 102 kann die Zuverlässigkeit des Druckers 100 erhöht werden. Die Informationsmittel 204 können z.B. Informationen über Kapselmaterial, Kapselinhalt, Anzahl von Komponenten 108, 208, Reihenfolge und/oder Schichtung (seriell oder parallel) der Komponenten 108, 208 anzeigen. Der Drucker 100 kann somit zuverlässig ermitteln, welche Komponenten 108, 208 mit welchen (optischen bzw. spektralen) Eigenschaften zu erwarten sind. So können die Kosten eines Spektralsensors 110 reduziert und/oder die Qualität der Auswertung der Spektraldaten erhöht werden.

Insbesondere bei Eigenbefüllung durch einen Nutzer kann ein Phasentrennmittel (flüssig oder pastös) verwendet werden, um einen möglichst eindeutigen Übergang zwischen Komponenten 108, 208 zu ermöglichen. Das Phasentrennmittel kann dabei eine Phasengrenze bilden. Das Phasentrennmittel kann spezifische optische bzw. spektrale Eigenschaften aufweisen, die von dem Sensor 110 erfasst werden können, um dem Drucker 100 einen Komponentenübergang zu signalisieren. So kann auch ohne Kenntnis der optischen Eigenschaften der einzelnen Komponenten 108, 208 ein Komponentenübergang zuverlässig detektiert werden.

Fig. 4 zeigt ein Ablaufdiagramm eines beispielhaften Verfahrens 400 zur Steuerung eines Nahrungsmitteldruckers 100. Der Nahrungsmitteldrucker 100 ist eingerichtet, Druckmasse 108, 208 aus einem Behälter 102 auf eine Ablagefläche 104 zu extrudieren, um ein Nahrungsmittel 105 zu drucken. Das Verfahren 400 kann z.B. durch eine Steuereinheit 107 des Nahrungsmitteldruckers 100 ausgeführt werden. Das Verfahren 400 umfasst das Ermitteln 401 von Spektraldaten bezüglich der Druckmasse 108, 208 in dem Behälter 102. Dabei hängen die Spektraldaten von einem Transmissionsgrad und/oder von einem Reflexionsgrad der Druckmasse 108, 208 für elektromagnetische Strahlung ab. Insbesondere können die Spektraldaten den Transmissionsgrad und/oder den Reflexionsgrad anzeigen. Außerdem umfasst das Verfahren 400 das Steuern 402 des Nahrungsmitteldruckers 100 in Abhängigkeit von den Spektraldaten.

Auf Basis der in diesem Dokument beschriebenen Maßnahmen können die Eigenschaften von ein oder mehreren Druckmassen 108, 208 in einem Behälter 102 in zuverlässiger Weise ermittelt werden, um Nahrungsmittel 105 mit hoher Qualität drucken zu können. Insbesondere kann erkannt werden, ob ein Behälter leer ist und/oder ober ein unbekannter Behälter 102 in den Druckkopf 120 eingesetzt wurde. Außerdem kann ggf. erkannt werden, ob ein industriell gefüllter und bekannter Behälter, der bereits entleert wurde, von einem Nutzer erneut gefüllt und eingesetzt wurde, und/oder ob ein teilweise entleerter Behälter, wieder eingesetzt wird (in diesem Fall kann ggf. ein Füllstand gespeichert und bei Bedarf wieder abgerufen werden). Des Weiteren können in zuverlässiger Weise Übergänge zwischen Druckmassen 108, 208 erkannt werden, was einen qualitativ hochwertigen Mehrkomponenten-Lebensmitteldruck ermöglicht. Außerdem können Druckparameter in präziser Weise an Eigenschaften der jeweiligen Druckmasse 108, 208 angepasst werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Druckers 100, der vorgeschlagenen Steuereinheit 107 und/oder des vorgeschlagenen Verfahrens 400 veranschaulichen sollen.

## Patentansprüche

1. Steuereinheit (107) für einen Nahrungsmitteldrucker (100), der eingerichtet ist, Druckmasse (108, 208) aus einem Behälter (102) auf eine Ablagefläche (104) zu extrudieren, um ein Nahrungsmittel (105) zu drucken, wobei die Steuereinheit (107) eingerichtet ist,
- Spektraldaten bezüglich der Druckmasse (108, 208) in dem Behälter (102) zu ermitteln; wobei die Spektraldaten von einem Transmissionsgrad und/oder von einem Reflexionsgrad der Druckmasse (108, 208) für elektromagnetische Strahlung zumindest einer Wellenlänge (301) abhängen; und
- den Nahrungsmitteldrucker (100) in Abhängigkeit von den Spektraldaten zu steuern.

2. Steuereinheit (107) gemäß Anspruch 1, wobei
- die Steuereinheit (107) dafür eingerichtet ist, mit einem Nahrungsmitteldrucker (100) zusammenzuarbeiten, der einen Spektralsensor (110), insbesondere ein Spektrometer, mit einem Sender (211) und einem Empfänger (212) umfasst;
- wobei der Sender (211) eingerichtet ist, elektromagnetische Strahlung in Richtung des Behälters (102) auszusenden; und
- der Empfänger (212) eingerichtet ist, elektromagnetische Strahlung zu erfassen, die von dem Behälter (102), insbesondere von Druckmasse (108, 208) in dem Behälter (102), reflektiert wurde und/oder die den Behälter (102) durchlaufen hat;
- wobei die Steuereinheit (107) eingerichtet ist, die Spektraldaten auf Basis einer Eigenschaft der ausgesendeten und der empfangenen elektromagnetischen Strahlung zu ermitteln.

3. Steuereinheit (107) gemäß einem der vorhergehenden Ansprüche, wobei
- die Steuereinheit (107) eingerichtet ist, auf Basis der Spektraldaten einen Übergang zwischen einer ersten Druckmasse (108) und einer zweiten Druckmasse (208) im Behälter (102) zu detektieren; und
- die Steuereinheit (107) eingerichtet ist, bei dem Übergang von der ersten Druckmasse (108) zu der zweiten Druckmasse (208) ein oder mehrere Druckparameter des Nahrungsmitteldruckers (100) anzupassen.

4. Steuereinheit (107) gemäß Anspruch 3, wobei
- die Steuereinheit (107) eingerichtet ist, auf Basis der Spektraldaten und auf Basis einer bestimmten spektralen Eigenschaft eines Trennmittels zwischen der ersten Druckmasse (108) und der zweiten Druckmasse (208) den Übergang zwischen der ersten Druckmasse (108) und der zweiten Druckmasse (208) zu detektieren.

5. Steuereinheit (107) gemäß einem der vorhergehenden Ansprüche, wobei
- die Steuereinheit (107) eingerichtet ist, ein oder mehrere Druckparameter des Nahrungsmitteldruckers (100) in Abhängigkeit von den Spektraldaten anzupassen; und
- die ein oder mehreren Druckparameter umfassen: eine Geschwindigkeit und/oder einen Druck, mit der bzw. mit dem Druckmasse (108, 208) aus dem Behälter (102) extrudiert wird; eine Position der Ablagefläche (104), an der Druckmasse (108, 208) aus dem Behälter (102) extrudiert wird; und/oder eine Höhe über der Ablagefläche (104), aus der Druckmasse (108, 208) aus dem Behälter (102) extrudiert wird.

6. Steuereinheit (107) gemäß einem der vorhergehenden Ansprüche, wobei
- die Spektraldaten von dem Transmissionsgrad und/oder von dem Reflexionsgrad der Druckmasse (108, 208) für elektromagnetische Strahlung in einem Wellenlängen-Bereich mit einer Vielzahl von unterschiedlichen Wellenlängen (301) abhängen; und
- die Steuereinheit (107) eingerichtet ist, auf Basis der Spektraldaten einen Inhaltsstoff der Druckmasse (108, 208) zu ermitteln.

7. Steuereinheit (107) gemäß einem der vorhergehenden Ansprüche, wobei
- die Steuereinheit (107) eingerichtet ist, den Nahrungsmitteldrucker (100) in Abhängigkeit von Identifikationsdaten in Bezug auf Druckmasse (108, 208) in dem Behälter (102) zu steuern, die von Identifikationsmitteln (204) im Behälter (102) angezeigt werden.

8. Steuereinheit (107) gemäß Anspruch 7, wobei die Steuereinheit (107) eingerichtet ist, eine Eigenschaft der elektromagnetischen Strahlung, die zur Ermittlung der Spektraldaten verwendet wird, in Abhängigkeit von den Identifikationsdaten anzupassen.

9. Steuereinheit (107) gemäß einem der Ansprüche 7 bis 8, wobei die Steuereinheit (107) eingerichtet ist,
- auf Basis der Identifikationsdaten Soll-Spektraldaten zu ermitteln;
- die Soll-Spektraldaten mit den Spektraldaten zu vergleichen; und
- in Abhängigkeit von dem Vergleich einen Hinweis an einen Nutzer des Nahrungsmitteldruckers (100) auszugeben.

10. Steuereinheit (107) gemäß einem der vorhergehenden Ansprüche, wobei
- die Steuereinheit (107) eingerichtet ist, den Nahrungsmitteldrucker (100) in Abhängigkeit von Temperaturdaten in Bezug auf eine Temperatur des Behälters (102) und/oder der Druckmasse (108, 208) zu steuern, die von einem Pyrometer (205) im Nahrungsmitteldrucker (100) erfasst werden.

11. Nahrungsmitteldrucker (100) zum Druck eines Nahrungsmittels (105) auf einer Ablagefläche (104), wobei der Nahrungsmitteldrucker (100) umfasst,
- einen Druckkopf (120) mit einem Behälter (102) zur Aufnahme von Druckmasse (108, 208);
- einen Sensor (110) zur Erfassung von Spektraldaten bezüglich der Druckmasse (108, 208) in dem Behälter (102); und
- eine Steuereinheit (107) gemäß einem der vorhergehenden Ansprüche.

12. Verfahren (400) zur Steuerung eines Nahrungsmitteldruckers (100), der eingerichtet ist, Druckmasse (108, 208) aus einem Behälter (102) auf eine Ablagefläche (104) zu extrudieren, um ein Nahrungsmittel (105) zu drucken, wobei das Verfahren (400) umfasst,
- Ermitteln (401) von Spektraldaten bezüglich der Druckmasse (108, 208) in dem Behälter (102); wobei die Spektraldaten von einem Transmissionsgrad und/oder von einem Reflexionsgrad der Druckmasse (108, 208) für elektromagnetische Strahlung mit zumindest einer Wellenlänge (301) abhängen; und
- Steuern (402) des Nahrungsmitteldruckers (100) in Abhängigkeit von den Spektraldaten.

## Claims

1. Control unit (107) for a food printer (100), which is designed to extrude printing compound (108, 208) from a container (102) onto a tray (104) in order to print a food (105), wherein the control unit (107) is designed,
- to determine spectral data relating to the printing compound (108, 208) in the container (102), wherein the spectral data depends on a transmission degree and/or on a reflection degree of the printing compound (108, 208) for electromagnetic radiation of at least one wavelength (301), and
- to control the food printer (100) as a function of the spectral data.

2. Control unit (107) according to claim 1, wherein
- the control unit (107) is designed to cooperate with a food printer (100), which comprises a spectral sensor (110), in particular a spectrometer, with a transmitter (211) and a receiver (212);
- wherein the transmitter (211) is designed to emit electromagnetic radiation in the direction of the container (102); and
- the receiver (212) is designed to capture electromagnetic radiation which has been reflected by the container (102), in particular by printing compound (108, 208) in the container (102), and/or has run through the container (102);
- wherein the control unit (107) is designed to determine spectral data on the basis of a property of the emitted and received electromagnetic radiation.

3. Control unit (107) according to one of the preceding claims, wherein
- the control unit (107) is designed to detect a transition between a first printing compound (108) and a second printing compound (208) in the container (102) on the basis of the spectral data; and
- the control unit (107) is designed to adjust one or more printing parameters of the food printer (100) with the transition from the first printing compound (108) to the second printing compound (208).

4. Control unit (107) according to claim 3, wherein
- the control unit (107) is designed to detect the transition between the first printing compound (108) and the second printing compound (208) on the basis of the spectral data and on the basis of a specific spectral property of a separating means between the first printing compound (108) and the second printing compound (208).

5. Control unit (107) according to one of the preceding claims, wherein
- the control unit (107) is designed to adjust one or more printing parameters of the food printer (100) as a function of the spectral data; and
- the one or more printing parameters comprise: a speed and/or a pressure with which printing compound (108, 208) is extruded from the container (102), a position of the tray (104), on which printing compound (108, 208) is extruded from the container (102), and/or height above the tray (104), from which the printing compound (108, 208) is extruded from the container (102).

6. Control unit (107) according to one of the preceding claims, wherein
- the spectral data depends on the transmission degree and/or on the reflection degree of the printing compound (108, 208) for electromagnetic radiation in a wavelength range with a plurality of different wavelengths (301); and
- the control unit (107) is designed to determine an ingredient of the printing compound (108, 208) on the basis of the spectral data.

7. Control unit (107) according to one of the preceding claims, wherein
- the control unit (107) is designed to control the food printer (100) as a function of the identification data relating to printing compound (108, 208) in the container (102), which is indicated by identification means (204) in the container (102).

8. Control unit (107) according to claim 7, wherein the control unit (107) is designed to adjust a property of the electromagnetic radiation, which is used to determine the spectral data, as a function of the identification data.

9. Control unit (107) according to one of claims 7 to 8, wherein the control unit (107) is designed
- to determine target spectral data on the basis of the identification data;
- to compare target spectral data with the spectral data; and
- to output a notification to a user of the food printer (100) as a function of the comparison.

10. Control unit (107) according to one of the preceding claims, wherein
- the control unit (107) is designed to control the food printer (100) as a function of the temperature data relating to a temperature of the container (102) and/or the printing compound (108, 208), which are captured by a pyrometer (205) in the food printer (100).

11. Food printer (100) for printing a food (105) on a tray (104), wherein the food printer (100) comprises,
- a printing head (120) with a container (102) for receiving printing compound (108, 208);
- a sensor (110) for capturing spectral data relating to the printing compound (108, 208) in the container (102); and
- a control unit (107) according to one of the preceding claims.

12. Method (400) for controlling a food printer (100), which is designed to extrude printing compound (108, 208) from a container (102) on a tray (104) in order to print a food (105), wherein the method (400) comprises,
- determining (401) spectral data relating to the printing compound (108, 208) in the container (102), wherein the spectral data depends on a transmission degree and/or on a reflection degree of the printing compound (108, 208) for electromagnetic radiation with at least one wavelength (301); and
- controlling (402) the food printer (100) as a function of the spectral data.

## Revendications

1. Unité de commande (107) pour une imprimante alimentaire (100) qui est configurée pour extruder une masse à imprimer (108, 208) sur une surface de pose (104) à partir d'un récipient (102) afin d'imprimer un aliment (105), l'unité de commande (107) étant configurée
- pour déterminer des données spectrales relatives à la masse à imprimer (108, 208) se trouvant dans le récipient (102) ; les données spectrales dépendant d'un degré de transmission et/ou d'un degré de réflexion de la masse à imprimer (108, 208) pour un rayonnement électromagnétique au moins d'une longueur d'onde (301) ; et
- pour commander l'imprimante alimentaire (100) en fonction des données spectrales.

2. Unité de commande (107) selon la revendication 1, dans laquelle
- l'unité de commande (107) est configurée pour coopérer avec une imprimante alimentaire (100) laquelle comprend un capteur spectral (110), notamment un spectromètre, doté d'un émetteur (211) et d'un récepteur (212) ;
- dans laquelle l'émetteur (211) est configuré pour émettre un rayonnement électromagnétique en direction du récipient (102) ; et
- dans laquelle le récepteur (212) est configuré pour détecter un rayonnement électromagnétique qui a été réfléchi par le récipient (102), notamment par la masse à imprimer (108, 208) se trouvant dans le récipient (102), et/ou qui a traversé le récipient (102),
- dans laquelle l'unité de commande (107) est configurée pour déterminer les données spectrales sur la base d'une caractéristique du rayonnement électromagnétique émis et du rayonnement électromagnétique reçu.

3. Unité de commande (107) selon l'une quelconque des revendications précédentes, dans laquelle
- l'unité de commande (107) est configurée pour détecter, sur la base des données spectrales, une transition entre une première masse à imprimer (108) et une deuxième masse à imprimer (208) se trouvant dans le récipient (102) ; et
- l'unité de commande (107) est configurée pour adapter un ou plusieurs paramètres d'impression de l'imprimante alimentaire (100) lors de la transition de la première masse à imprimer (108) vers la deuxième masse à imprimer (208).

4. Unité de commande (107) selon la revendication 3, dans laquelle
- l'unité de commande (107) est configurée pour détecter la transition entre la première masse à imprimer (108) et la deuxième masse à imprimer (208) sur la base des données spectrales et sur la base d'une caractéristique spectrale déterminée d'un agent de séparation entre la première masse à imprimer (108) et la deuxième masse à imprimer (208).

5. Unité de commande (107) selon l'une quelconque des revendications précédentes, dans laquelle
- l'unité de commande (107) est configurée pour adapter un ou plusieurs paramètres d'impression de l'imprimante alimentaire (100) en fonction des données spectrales ; et
- l'un ou les plusieurs paramètres d'impression comprennent : une vitesse et/ou une pression avec laquelle/lesquelles la masse à imprimer (108, 208) est extrudée hors du récipient (102) ; une position de la surface de pose (104) à laquelle la masse à imprimer (108, 208) est extrudée hors du récipient (102) ; et/ou une hauteur au-dessus de la surface de pose (104) à partir de laquelle la masse à imprimer (108, 208) est extrudée hors du récipient (102).

6. Unité de commande (107) selon l'une quelconque des revendications précédentes, dans laquelle
- les données spectrales dépendent du degré de transmission et/ou du degré de réflexion de la masse à imprimer (108, 208) pour le rayonnement électromagnétique dans une plage de longueurs d'ondes ayant une pluralité de différentes longueurs d'ondes (301) ; et
- l'unité de commande (107) est configurée pour déterminer un ingrédient de la masse à imprimer (108, 208) sur la base des données spectrales.

7. Unité de commande (107) selon l'une quelconque des revendications précédentes, dans laquelle
- l'unité de commande (107) est configurée pour commander l'imprimante alimentaire (100) en fonction de données d'identification relatives à la masse à imprimer (108, 208) se trouvant dans le récipient (102), lesquelles sont indiquées par des moyens d'identification (204) situés dans le récipient (102).

8. Unité de commande (107) selon la revendication 7, dans laquelle l'unité de commande (107) est configurée pour adapter une caractéristique du rayonnement électromagnétique, laquelle est utilisée pour déterminer les données spectrales, en fonction des données d'identification.

9. Unité de commande (107) selon l'une quelconque des revendications 7 à 8, dans laquelle l'unité de commande (107) est configurée
- pour déterminer des données spectrales théoriques sur la base des données d'identification ;
- pour comparer les données spectrales théoriques aves les données spectrales ; et
- pour sortir une indication à un utilisateur de l'imprimante alimentaire (100) en fonction de la comparaison.

10. Unité de commande (107) selon l'une quelconque des revendications précédentes, dans laquelle
- l'unité de commande (107) est configurée pour commander l'imprimante alimentaire (100) en fonction de données de température relatives à une température du récipient (102) et/ou de la masse à imprimer (108, 208), lesquelles sont détectées par un pyromètre (205) situé dans l'imprimante alimentaire (100).

11. Imprimante alimentaire (100) destinée à imprimer un aliment (105) sur une surface de pose (104), l'imprimante alimentaire (100) comprenant
- une tête d'impression (120) avec un récipient (102) destiné à recevoir la masse à imprimer (108, 208) ;
- un capteur (110) destiné à détecter des données spectrales relatives à la masse à imprimer (108, 208) se trouvant dans le récipient (102) ; et
- une unité de commande (107) selon l'une quelconque des revendications précédentes.

12. Procédé (400) de commande d'une imprimante alimentaire (100) qui est configurée pour extruder une masse à imprimer (108, 208) sur une surface de pose (104) à partir d'un récipient (102) afin d'imprimer un aliment (105), le procédé (400) comprenant
- détermination (401) de données spectrales relatives à la masse à imprimer (108, 208) se trouvant dans le récipient (102) ; les données spectrales dépendant d'un degré de transmission et/ou d'un degré de réflexion de la masse à imprimer (108, 208) pour un rayonnement électromagnétique ayant au moins d'une longueur d'onde (301) ; et
- commande (402) de l'imprimante alimentaire (100) en fonction des données spectrales.
